# DEMANDE DE BREVET EUROPEEN

(11) **EP 2 151 842 A1**
(43) Date de publication de la demande: **10.02.2010**
(21) Numéro de dépôt: 08162014.8
(22) Date de dépôt: 07.08.2008
(51) Int. Cl.: H01H 25/04

(54) **Commutateur comprenant un système d'indexation ayant une came en V et un index à embout hémisphérique**

(71) Demandeur: Delphi Technologies, Inc., Troy, Michigan 48007 (US)
(72) Inventeur: Lobstein, Roland, 67000, Strasbourg (FR); Cordier, Emmanuel, 67190, Grendelbruch (FR)
(74) Mandataire: Robert, Vincent

(57) **Abrégé**

Commutateur (1) comprenant une interface utilisateur (4), une platine (6), une embase (2), et un système d'indexation (8) de la platine (6) sur l'embase (2), l'interface utilisateur (4) étant solidaire de la platine (6) elle-même mobile sur l'embase (2) suivant un degré de liberté, le système d'indexation (8) comprenant un index d'encliquetage (10) coopérant élastiquement avec une came (14) rainurée d'au moins deux rainures (18, 19), l'index (10) et la came (14) pouvant se déplacer l'un par rapport à l'autre suivant une direction de déplacement (D1), la came (14) étant solidaire de l'embase (2) et l'index (10) de la platine (6), l'index (10) pouvant se déplacer par rapport à la platine (6) suivant un axe (A2) et étant maintenu en contact avec la came (14), par un ressort (16), les rainures (18, 19) de la came (14) ayant chacune une direction de rainurage (D2, D3) et ayant, dans un plan (P1) perpendiculaire à leur direction de rainurage (D2, D3), une section (28) formant un premier V (V1), le système d'indexation (8) étant agencé de sorte que la direction de déplacement (D1) soit perpendiculaire à la direction de rainurage (D2), ainsi, la platine (14) se trouve dans un état stable (E1) par rapport à l'embase (2) lorsque l'embout (12) se loge dans une des rainure (18), **caractérisé en ce que** l'embout (12) est globalement hémisphérique, et en ce que, la direction de rainurage (D2, D3) est une ligne brisée formant un second V (V2) en creux orthogonal au premier V (V1) de la section (28) et inscrit dans un plan de rainurage (P2) normal à la direction de déplacement (D1).

## Description

### DOMAINE TECHNIQUE

La présente invention concerne les commutateurs notamment utilisés dans les commandes sous volant de véhicules.

### ARRIERE-PLAN TECHNOLOGIQUE DE L'INVENTION

Les commandes sous volants des voitures modernes sont nombreuses, réparties et combinées. Par exemple, le basculement vers le haut, ou le bas, d'un levier commande les indicateurs de changement de direction alors que la rotation du même levier commande les essuies glaces et qu'un bouton situé à l'extrémité commande un affichage au tableau de bord. Des commutateurs indexés en position sont alors indispensables pour permettre à l'utilisateur de les manipuler surement et simplement tout en gardant son attention fixée sur la route. Les commutateurs sont associés à une variété d'interfaces utilisateur : leviers, boutons rotatifs, curseurs, molettes... choisies en fonction de l'utilisation.

Un commutateur comprend, généralement, une interface utilisateur, une platine, une embase et un système d'indexation de la platine par rapport à l'embase. L'interface utilisateur permet de choisir une commande en déplaçant la platine, par rapport à l'embase, jusque dans un état stable défini par le système d'indexation.

Le système d'indexation comprend un index d'encliquetage coopérant élastiquement avec une came rainurée, l'index et la came restant en contact grâce à un ressort. L'index et la came peuvent se déplacer l'un par rapport à l'autre suivant une direction de déplacement perpendiculaire aux rainures, l'un des deux éléments étant solidaire de l'embase, l'autre de la platine.

La came a autant de rainures que le commutateur a de positions de commande.

Chaque rainure a deux flancs formant une section sensiblement en V, les flancs étant générés par la translation de la section en V suivant une direction de rainurage rectiligne.

Ainsi la platine se trouve dans un état stable par rapport à l'embase lorsque l'index d'encliquetage se loge dans une rainure de la came, et alors, l'index d'encliquetage a deux contacts dans la rainure, un avec chaque flanc. En cours de déplacement, entre deux états stables, lorsque l'index est à mi-flanc de rainure, il n'a qu'un seul contact avec la rainure.

La construction interne des systèmes d'indexation connaît de nombreuses variantes avec, dans certains cas la came solidaire de l'embase et dans d'autres l'index solidaire de l'embase ; ou encore avec des cames de profils complexes adaptés à l'utilisation. Le principe général de sélection de position par encliquetage reste identique.

Quelles que soient les variantes utilisées ces commutateurs indexés sont particulièrement sensibles aux vibrations auxquelles ils sont soumis lorsqu'ils sont agencés dans un véhicule. En effet, ces vibrations sont transmises au système d'indexation qui comporte des jeux de positionnement et de montage, notamment entre la came et l'index d'encliquetage, ce qui produit des petits déplacements relatifs entre la came et l'index d'encliquetage en contact, alors qu'un ressort appuie sur le contact, et ce qui entraine le matage et la détérioration des zones de contact. Ce phénomène s'accentue au fur et à mesure de la vie du produit et amène à une dégradation substantielle de la prestation fournie à l'utilisateur. Ainsi, à terme, un bruit désagréable apparaît en même temps que, pour l'utilisateur, les commandes sont moins précises. L'appréciation subjective de l'utilisateur devient négative.

### RESUME DE L'INVENTION

Dans le but de résoudre les problèmes décrits ci-avant, la présente invention propose un commutateur équipé d'un système d'indexation de positions, du type décrit précédemment, et avantageusement amélioré par des géométries coordonnées des rainures et de l'embout de l'index. Ces géométries sont telles que l'index est toujours guidé latéralement par rapport à la came rainurée, tant en cours de déplacement qu'en état stable, dans une rainure.

Le système d'indexation de la présente invention est **caractérisé en ce que** l'index d'encliquetage a un embout globalement hémisphérique, ou ovoïde, et en ce que, chaque rainure a une direction de rainurage suivant une ligne brisée formant un second V en creux orthogonal au premier V de la section de la rainure, le second V étant inscrit dans un plan de rainurage normal à la direction de déplacement.

Chaque rainure est constituée de quatre surfaces formant deux à deux, des demi-rainures à section suivant le premier V, chacune des quatre surfaces étant générée par la projection du premier V suivant chacun des bras du second V. Chaque flanc de rainure est constitué de deux surfaces distinctes non coplanaires.

Un état stable de la platine est défini à chaque fois que l'embout hémisphérique de l'index s'encliquette au creux d'un logement formé par la réunion des demi-rainures, réunion matérialisée par les quatre surfaces. Ainsi, dans un état stable de la platine, l'embout hémisphérique peut avoir jusqu'à quatre points de contact distincts et non alignés, un avec chacune des quatre surfaces. Chaque creux de rainure définit ainsi une position précise et privilégiée pour le positionnement de l'embout hémisphérique de l'index. La platine est alors avantageusement positionnée de manière stable par rapport à l'embase.

Lors d'un changement de position, en passant d'un état stable à l'état stable voisin, l'index quitte le creux de la rainure où il se trouvait, gravit un flanc de rainure avant de passer la crête pour ensuite descendre dans la rainure suivante vers le creux matérialisant la position stable suivante. Le flanc avec lequel l'index est en contact, que ce soit lors de la montée ou de la descente, est constitué de deux surfaces distinctes non coplanaires, et ainsi, l'embout hémisphérique de l'index et le flanc de rainure ont deux points de contact guidant l'index latéralement.

Cette construction à « direction de rainurage en ligne brisée en V » résous donc les problèmes posés par les constructions classiques « à direction de rainurage rectiligne ».

Les géométries combinées de la rainure et de l'embout hémisphérique de l'index d'encliquetage peuvent être appliquées à une large variété de systèmes d'indexation, la came peut avoir sensiblement la forme d'un secteur angulaire cylindrique ou bien celle d'un secteur angulaire de disque plan avec des rainures ayant des directions de rainurage radiales concentriques s'agençant en une couronne sensiblement plane dont le centre est sur l'axe de rotation de la platine.

La came peut encore être globalement plane, les plans de rainurage étant parallèles les uns aux autres.

Dans une variante usuelle, le commutateur équipé d'un système d'indexation, comme décrit ci-avant, comprend trois états stables (e.g. commande d'indicateur de changement de direction du véhicule) correspondant à autant de rainures. La rainure centrale correspond à une position neutre et les deux rainures situées de part et d'autre correspondent à des commandes distinctes (e.g. indicateur droit et indicateur gauche).

Dans une autre variante usuelle le commutateur équipé d'un système d'indexation, comme décrit ci-avant, comprend plusieurs états stables (e.g. commande d'essuies glace du véhicule, allumage de phares), correspondant à autant de rainures (e.g. vitesses d'essuyage ; feux de croisement, plein phares, brouillards....), la position neutre correspondant à une rainure située à une extrémité de la série des rainures, les rainures suivantes correspondant à des commandes distinctes.

Dans une autre variante usuelle, le commutateur, équipé d'un système d'indexation ci-avant décrit, comprend une came rainurée sur 360° et le commutateur est dépourvu de butée et il peut tourner sur 360° ou plus (e.g. bouton de volume de chaîne HiFi, sélection fine de vitesse d'essuyage).

La construction ci-présentée aménage dans un état stable quatre contacts entre l'embout de l'index et la rainure. Des imprécisions de construction, de réalisation ou d'assemblage d'un tel indexeur peuvent entraîner une géométrie de rainure telle, qu'en position stable, l'embout de l'index n'ait que trois contacts avec la rainure. Avantageusement, l'indexeur conserve, malgré les imperfections de réalisation, sa propriété de stabilisation de l'index.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue de dessus d'un commutateur comprenant un système d'indexation selon l'invention.
- la figure 2 est un schéma qui représente un détail du système d'indexation de la figure 1 comportant une came et un index.
- la figure 3 est une vue en perspective qui représente la came rainurée du système d'indexation de la figure 1.
- la figure 4 est un schéma qui illustre les quatre points de contact de l'embout de l'index avec les flancs d'une rainure de la came.
- la figure 5 est une vue de côté qui représente le commutateur de la figure 1 lorsque l'index est dans le fond d'une rainure de la came.
- la figure 6 est une vue de côté qui représente un système d'indexation selon l'invention du type bouton rotatif avec une came « disque ».
- la figure 7 est une vue de dessus de la came disque de la figure 6 illustrant les rainures disposées en couronne.
- la figure 8 est une vue en coupe longidutinale qui représente un système d'indexation selon l'invention du type curseur linéaire.
- la figure 9 est une vue en coupe transversale du curseur linéaire de la figure 8.

### DESCRIPTION DES MODES DE REALISATION PREFERES

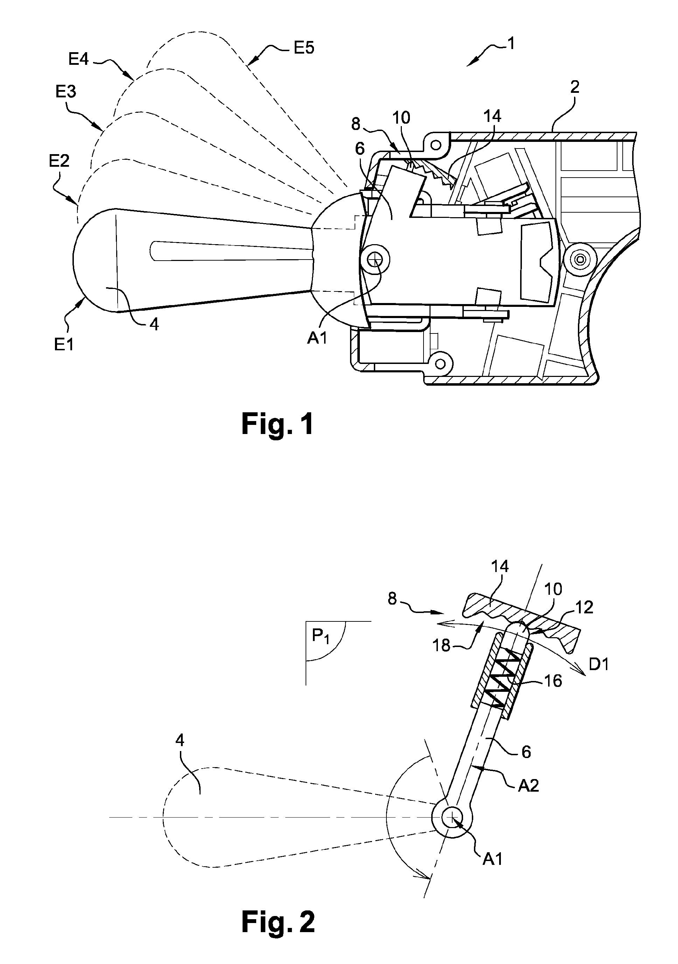

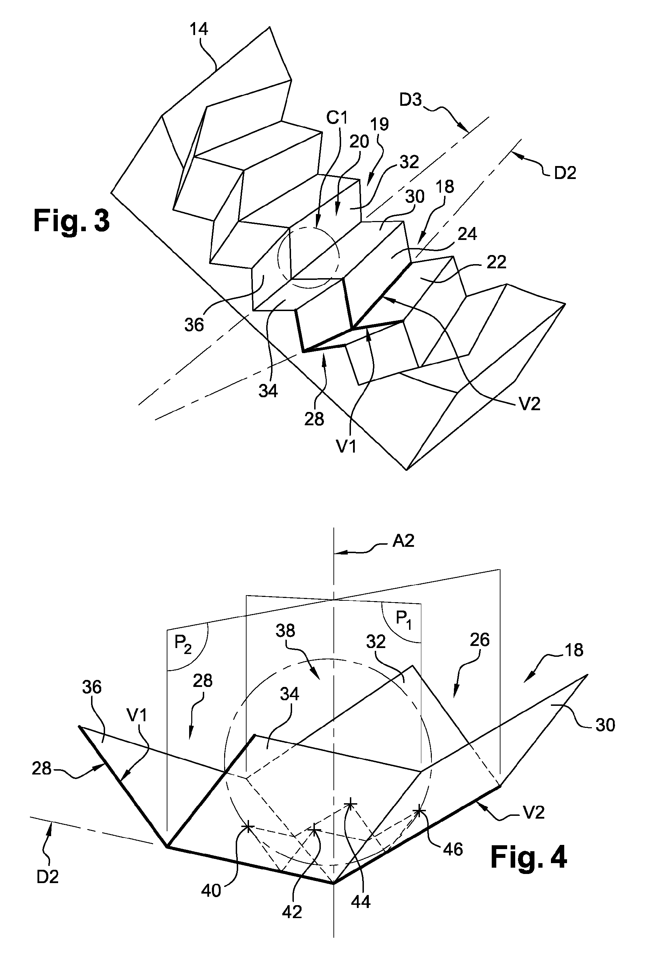

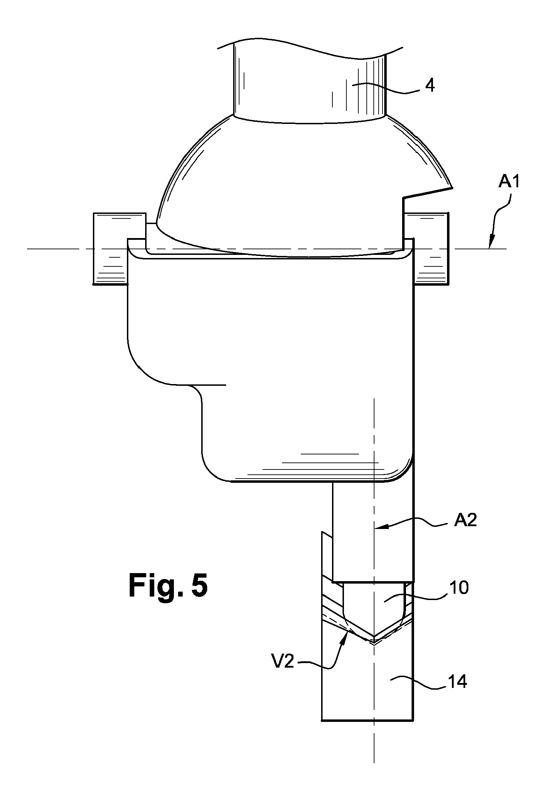

Suivant un premier mode de réalisation de la présente invention, représenté par les figures 1 à 5, un commutateur 1 est prévu pour être monté dans un véhicule sous la forme d'un organe de commande sous volant. Selon l'exemple représenté, le commutateur 1 commande les essuies glace d'un véhicule.

Le commutateur 1 comprend une embase 2 agencée sous le volant (non représenté) du véhicule, une interface utilisateur 4, ici un levier, une platine 6, et un système d'indexation 8 de la platine 6 par rapport à l'embase 2.

Le commutateur 1 comporte également un boîtier de commande (non représenté) muni de contacts électriques prévus pour déclencher les essuies glace et sélectionner, en fonction de la position angulaire occupée par l'interface utilisateur 4, les modes d'essuyage.

L'interface utilisateur 4 est solidaire de la platine 6, elle-même mobile par rapport à l'embase 2 suivant un degré de liberté, ici une rotation autour d'un axe A1.

Le système d'indexation 8 comprend un index d'encliquetage 10 ayant un embout 12 hémisphérique coopérant élastiquement avec une came rainurée 14. L'index 10 est ici solidaire de la platine 6 et la came 14 est solidaire de l'embase 2. L'index 10 est ici monté coulissant radialement sur la platine 6 et il est sollicité contre la came 14 au moyen d'un premier ressort 16.

L'index 10 se déplace par rapport à la came 14 suivant une direction de déplacement D1 ici sensiblement circulaire, inscrite dans un plan P1 orthogonal à l'axe de rotation A1 de la platine 6.

La came 14 comprend au moins deux rainures 18, 20. Les rainures 18, 20 ont chacune une direction de rainurage D2, D3 suivant laquelle chaque rainure 18, 20 développe deux flancs 22, 24 qui forment une section 28 suivant un premier V, V1. Orthogonalement à la section 28, la direction de rainurage D2, D3 suit une ligne brisée formant le second V, V2 en creux. Le second V, V2 de la direction de rainurage D2 d'une rainure 18 est inscrit dans un plan de rainurage P2 propre à chaque rainure 18.

Chaque rainure 18 comprend en tout quatre surfaces 30, 32, 34, 36 distinctes et non coplanaires. Les surfaces 30, 32, 34, 36 sont ici représentées planes. Les surfaces 30, 32, 34, 36 sont générées par la projection du premier V, V1, de la section 28 suivant chacun des deux bras du second V, V2 de la direction de rainurage D2. Les surfaces 30, 32, 34, 36 forment deux à deux 30, 32, des demi-rainures à section suivant le premier V, V1. Chaque flanc 22, 24 de rainure 18 est lui-même constitué de deux surfaces 32, 36 distinctes non coplanaires.

Le système d'indexation 8 est agencé de sorte que pour toute position de l'index 10 par rapport à la came 14, la direction de déplacement D1 de l'index 10 soit perpendiculaire au plan de rainurage P2 local.

Un état stable de la platine 6 est sélectionné à chaque fois que l'embout hémisphérique 12 de l'index 10 s'encliquette au creux C1 d'une rainure 18 formé par la réunion des deux demi-rainures, réunion matérialisée par les quatre surfaces 30, 32, 34 et 36.

Dans un état stable de la platine 6, l'embout 12 hémisphérique peut avoir jusqu'à quatre points de contact 40, 42, 44, 46 distincts non alignés, un avec chacune des surfaces 30, 32, 34, 36. Le creux C1 d'une rainure 18 définit ainsi, pour cette rainure 18, une position unique et privilégiée pour le positionnement de l'embout 12 hémisphérique de l'index 10. La platine 6 est ainsi positionnée avec précision et stabilité par rapport à l'embase 2.

Lors d'un changement de position, en passant d'un état stable E1 à un état stable E2 voisin, l'embout 12 de l'index 10 quitte le creux C1 de la rainure 18 où il se trouvait, gravit le flanc 22 de rainure 18 avant de passer la crête pour ensuite descendre dans la rainure 19 suivante vers le creux matérialisant la position stable suivante. Le flanc 22 avec lequel l'embout 12 de l'index 10 est en contact est constitué de deux surfaces 30, 34 distinctes non coplanaires, et ainsi, à mi-flanc, l'embout 12 hémisphérique de l'index 10 et le flanc 22 de la rainure 18 ont deux points 40, 44 de contact guidant l'index 10 latéralement.

La platine 6 pivote incrémentallement d'un premier état stable E1 vers un second état stable E2 puis vers un troisième E3 jusqu'à un n-ième état stable de la platine. Sur les figures 1 et 2, la platine représentée comprend cinq états stables E1, E2, E3, E4 et E5 qui constituent des états stables de commutation. Les positions actionnées E2, E3, E4 et E5 sont illustrées en traits pointillés.

L'indexation des positions angulaires de l'interface utilisateur 4, correspondant aux différents états stables E1 de la platine 6, est obtenue au moyen du système d'indexation 8.

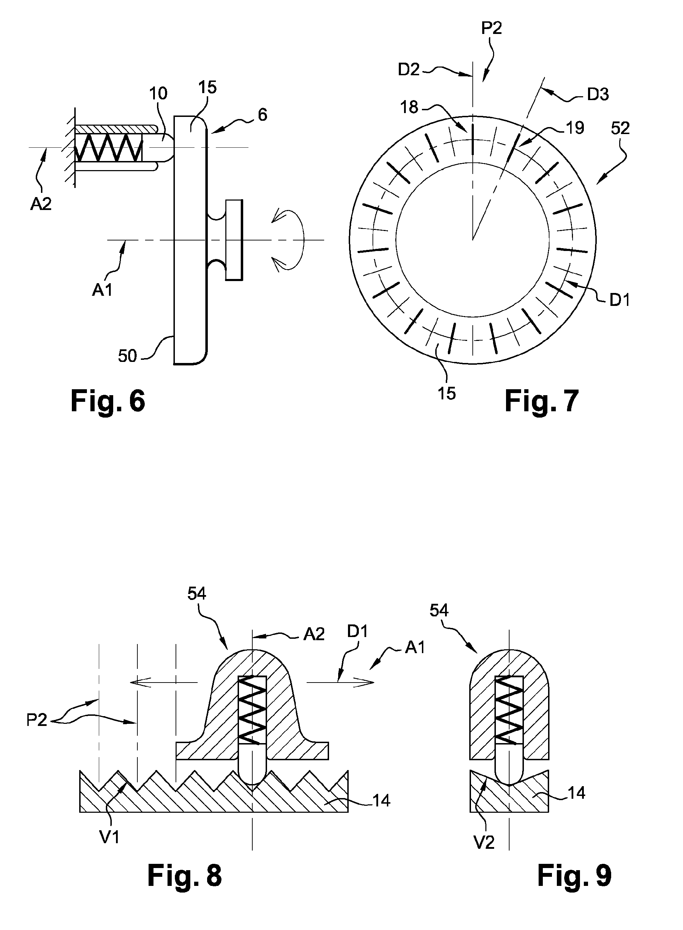

Suivant un second mode de réalisation, représenté par les figures 6 et 7, le commutateur 1 comprend un système d'indexation 8 rotatif tel que la came a la forme d'un secteur angulaire de disque 15 circulaire plan 50, et tel que les directions de rainurage D2, D3 sont radiales et concentriques et qu'ainsi les rainures 18, 19 s'agencent en une couronne 52 sensiblement plane, couronne 52 dont le centre est sur l'axe de rotation A1 de la platine.

Suivant un troisième mode de réalisation, représenté par les figures 8 et 9, le commutateur 1 est un curseur linéaire 54 comprenant un système d'indexation 8 tel que l'index 10 d'encliquetage se déplace par rapport à la came 14 suivant une droite, la came 14 étant globalement plane, et les plans de rainurage P2 de la came 14 parallèles les uns aux autres.

Suivant un quatrième mode de réalisation, variante du premier ou du second mode, le commutateur 1 est un bouton rotatif sans butée. Le système d'indexation 8 comprend une came 14 rainurée sur tout son pourtour. La platine 6 peut tourner sur 360° ou plus (e.g. bouton de volume de chaîne HiFi, sélection fine de température de système d'air conditionné). Ce mode de réalisation peut comprendre une came 14 cylindrique telle que suivant le premier mode ou bien une came disque 15 telle que suivant le second mode de réalisation.

Les modes de réalisation ci-avant présentés et illustrés ne sauraient être limitatifs des enseignements de la présente invention.

Le commutateur 1 peut être utilisé pour une commande sous volant dans un véhicule, mais plus largement, peut-être utilisé dans tout autre dispositif nécessitant un sélecteur de positions tels que chaine Hifi, appareil électroménager... L'interface utilisateur 4 sera alors choisie en fonction de l'environnement d'utilisation et pourra être un levier, un bouton rotatif, une molette, un curseur linéaire, une manette, ou tout autre sélecteur permettant la manipulation de la platine 6.

Les systèmes indexeur 8 décrits sont arbitrairement représentés tels que la came 14 est solidaire de l'embase 2 et l'index 10 solidaire de la platine 6. La réciproque est évidente avec un index 10 solidaire de l'embase 2 et une came 14 solidaire de la platine 6.

Les systèmes indexeurs 8 ici illustrés ne comprennent qu'un index 10 d'encliquetage. Pour des raisons d'équilibrage, par exemple, un système 8 peut avoir plusieurs index 8.

Les cames 14 présentant des géométries différentes, par exemple tronconique ou combinée de portions cylindriques et de portions planes, ayant des directions de rainurages D2 appropriées est également réalisable suivant les enseignements de la présente invention.

Les rainures 18 représentées ont des flancs 22 plans. Des flancs 22 courbes sont possibles, la géométrie étant adaptée à l'utilisation précise.

Les flancs 22 d'une même rainure se relient en fond de rainure 18 soit directement suivant un angle, soit au travers d'une surface de raccordement formant congé. L'embout 12 hémisphérique de l'index 10 n'étant en contact qu'avec les flancs 22, 24.

L'embout 12 de l'index 10 d'encliquetage peut être hémisphérique mais peut avoir une forme ovoïde allongée qui permette que le contact avec la rainure 18 soit toujours guidé latéralement.

## Revendications

1. Commutateur (1), pouvant notamment être utilisé dans un véhicule, comprenant
une interface utilisateur (4), une platine (6), une embase (2), et un système d'indexation (8) de la platine (6) par rapport à l'embase (2),
l'interface utilisateur (4) étant solidaire de la platine (6) elle-même mobile par rapport à l'embase (2) suivant un degré de liberté,
le système d'indexation (8) comprenant un index d'encliquetage (10) coopérant élastiquement avec une came (14) rainurée d'au moins deux rainures (18, 19),
l'index (10) et la came (14) pouvant se déplacer l'un par rapport à l'autre suivant une direction de déplacement (D1), la came (14), respectivement l'index (10), étant solidaire de l'embase (2) et l'index (10), respectivement la came (14), étant solidaire de la platine (6),
l'index (10) étant monté coulissant par rapport à la platine (6), respectivement l'embase (2), suivant un axe (A2) et étant maintenu en contact avec la came (14), par l'intermédiaire d'un ressort (16),
les rainures (18, 19) de la came (14) ayant chacune une direction de rainurage (D2, D3) et ayant, dans un plan (P1) perpendiculaire à leur direction de rainurage (D2, D3), une section (28) formant sensiblement un premier V (V1),
le système d'indexation (8) étant agencé de sorte que la direction de déplacement (D1) soit perpendiculaire à la direction de rainurage (D2),
de sorte que, la platine (14) se trouve dans un état stable (E1) par rapport à l'embase (2) lorsque l'embout (12) de l'index (10) d'encliquetage se loge dans une des rainure (18) de la came (14),
**caractérisé en ce que :**
l'embout (12) est globalement hémisphérique, et **en ce que**,
la direction de rainurage (D2, D3) est une ligne brisée formant un second V (V2) en creux orthogonal au premier V (V1) de la section (28) de la rainure (18) et inscrit dans un plan de rainurage (P2) normal à la direction de déplacement (D1).

2. Commutateur (1) suivant la revendication 1, **caractérisé en ce que** le degré de liberté est une rotation et **en ce que** la direction de déplacement (D1) relatif de l'index (10) par rapport à la came (14) s'inscrit dans un plan (P1) orthogonal à l'axe de rotation de la platine (6).

3. Commutateur (1) suivant la revendication 1, **caractérisé en ce que** le degré de liberté est une rotation et **en ce que**,
la direction de déplacement (D1) relatif de l'index (10) par rapport à la came (14) s'inscrit sur un cylindre d'axe confondu avec l'axe de rotation de la platine (A1), la came (14) ayant globalement la forme d'un secteur de disque (15) et les plans de rainurage (P2) étant radiaux concentriques de sorte que les rainures (18, 19) s'agencent sur le disque (15) en une couronne (52) sensiblement plane dont le centre est sur l'axe de rotation (A1) de la platine (6).

4. Commutateur (1) suivant la revendication 1, **caractérisé en ce que** le degré de liberté est une translation droite et **en ce que**
la came (14) est globalement plane, et **en ce que** les plans de rainurage (P2) de la came (14) sont parallèles les uns aux autres.

5. Commutateur (1) suivant l'une des revendications précédentes, **caractérisé en ce qu'**il comprend trois états stables (E1, E2, E3) correspondant à autant de rainures (18, 19), une rainure centrale correspondant à une position neutre et deux rainures situées de part et d'autre pour des commandes distinctes.

6. Commutateur (1) suivant une des revendications 1 à 4 et **caractérisé en ce qu'**il comprend plusieurs états stables (E1, En), correspondant à autant de rainures (18, 19), la position neutre correspondant à une rainure située à une extrémité de la série des rainures (18, 19), les rainures suivantes correspondant à des commandes distinctes.

7. Commutateur (1) suivant une des revendications 1 à 3 et **caractérisé en ce que** la came est rainurée sur 360° et que le commutateur (1) est sans butée et peut tourner sur 360° ou plus.

8. Système d'indexation (8) comprenant un index (10) d'encliquetage coopérant élastiquement avec une came (14) rainurée d'au moins deux rainures (18, 19),
l'index (10) et la came (14) pouvant se déplacer l'un par rapport à l'autre suivant un degré de liberté offrant une direction de déplacement (D1),
les rainures (18, 19) de la came (14) ayant chacune une direction de rainurage (D2, D3) et, dans un plan perpendiculaire (P1) à leur direction de rainurage (D2, D3), ayant une section formant sensiblement un premier V (V1),
le système d'indexation (8) étant agencé de sorte que, pour chaque positon relative de l'index (10) et de la came (14), la direction de déplacement (D1) soit perpendiculaire à la direction de rainurage (D2, D3),
de sorte que, l'index (10) se trouve dans un état stable (E1, En) par rapport à la came (14) lorsque il se loge dans une rainure (18, 19),
**caractérisé en ce que :**
l'index (10) d'encliquetage a un embout (12) globalement hémisphérique, et **en ce que**,
la direction de rainurage (D2, D3) est une ligne brisée formant un second V (V2) en creux orthogonal au premier V (V1) de la section (28) de la rainure (18) et inscrit dans un plan de rainurage (P2) normal à la direction de déplacement (D1).
